(19) Europäisches Patentamt
European Patent Office
Office européen des brevets

(11) Veröffentlichungsnummer: **0 119 662**
**B1**

(12) # EUROPÄISCHE PATENTSCHRIFT

(45) Veröffentlichungstag der Patentschrift: **13.01.88**

(51) Int. Cl.⁴: **C 04 B 28/18**

(21) Anmeldenummer: **84200380.8**

(22) Anmeldetag: **16.03.84**

(54) **Verfahren zum Herstellen von blockförmigen Wandbaustoffen.**

(30) Priorität: **16.03.83 DE 3309402**

(43) Veröffentlichungstag der Anmeldung: **26.09.84 Patentblatt 84/39**

(45) Bekanntmachung des Hinweises auf die Patenterteilung: **13.01.88 Patentblatt 88/2**

(84) Benannte Vertragsstaaten: **AT BE CH DE FR GB IT LI LU NL SE**

(56) Entgegenhaltungen:
**EP-A-0 038 552**
**EP-A-0 151 452**
**DE-A-3 303 042**
**DE-B-1 249 146**

(73) Patentinhaber: **SICOWA Verfahrenstechnik für Baustoffe GmbH & Co. KG, Handerweg 17, D-5100 Aachen (DE)**

(72) Erfinder: **Ludwig, Udo, Prof. Dr.- Ing., Schmiedgasse 6, D-5100 Aachen (DE)**
Erfinder: **Fröhlich, Alexander, Dipl.- Ing., Am Weissenberg 16- 18, D-5100 Aachen (DE)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

EP 0 119 662 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zum Herstellen von blockförmigen Wandbaustoffen auf Kalsilikatbasis, bei dem eine gießfähige Rohmischung im wesentlichen aus einem körnigen $SiO_2$-haltigen Material, Kalk, Wasser, Zement, einem zusätzlichen Alkaliträger und Schaum hergestellt, die Rohmischung in Formen gegossen und darin durch Wärmebehandlung im wesentlichen drucklos zu Rohlingen verarbeitet wird unter Ausnutzung der sich ergebenden Erhärtung während der Formstandzeit zur Erzielung einer ausreichenden Festigkeit der Rohlinge für die Entformung und den nachfolgenden Transport in einen Autoklaven, wo die Rohlinge dampfgehärtet werden, wobei der Zement durch einen Verzögerer derart eingestellt ist, daß dessen festigkeitsbildende Reaktionen im wesentlichen erst durch die Wärmeeinwirkung in der Form ausgelöst werden.

Ein derartiges Verfahren ist aus der EP-A-0 038 552 bekannt, bei dem ein Portlandzement zusammen mit einem Abbindebeschleuniger und gegebenenfalls -verzögerer bzw. ein entsprechend eingestellter Schnellzement verwendet wird, um zu erreichen, daß die Rohmischung, bevor sie in die Formen gegossen wird, eine genügende Vorhaltzeit aufweist, während der praktisch keine festigkeitsbildenden Reaktionen stattfinden. Letztere werden im wesentlichen erst durch die Wärmeeinwirkung, die in der Form erfolgt, ausgelöst, damit der Rohling eine genügende Festigkeit zum Entschalen und Transportieren aufweist. Bei diesen Verfahren benötigt man jedoch relativ große Mengen an Zement, um die notwendige Festigkeit zu erzielen.

Aufgabe der Erfindung ist es, ein Verfahren der eingangs gananntén Art zu schaffen, das es ermöglicht, mit einem geringeren Zementanteil auszukommen.

"Diese Aufgabe wird dadurch gelöst, daß als Zement Tonerdezement zusammen mit Anhydrit und wasserhaltigen Calciumsulfat verwendet wird derart, daß im wesentlichen gelförmiger Ettringit vor der Wärmebehandlung in der Rohmischung vorliegt, den man durch die Wärmeeinwirkung umkristallisiert".

Weitere Ausgestaltungen der Erfindung sind den Unteransprüchen und der nachfolgenden Beschreibung zu entnehmen.

Die Rohmischung wird hergestellt aus einem körnigen $SiO_2$-haltigen Material - etwa Qvarzsand, Flugasche o.dgl. -, Kalk, insbesondere in Form von Kalkhydrat, Schaum - der vorzugsweise als solcher zugesetzt wird, aber auch mittels eines Schaumbildners in der Rohmischung erzeugt werden kann -, Tonerdezement sowie wasserhaltigem Calciumsulfat - insbesondere Gips ($CaSO_4 \cdot 2H_2O$) -, Anhydrit ($CaSO_4$) und Alkaliionen, die vorzugsweise als wasserlösliches Silikat - Wasserglas - zugesetzt werden.

Durch das Kalkhydrat arbeitet man im kalkgesättigten Bereich. Da ferner Gips vorhanden ist, der relativ gut in Wasser löslich ist, ergibt sich in der Rohmischung eine Ettringitbildung gemäß folgender Reaktion:

$$CA + 3Cs + 2C + 32\,H \rightarrow C_3ACs_3 \cdot 32H$$

Hierbei stammen die 3Cs vom gelösten Gips und die 2C vom Kalkhydrat. Der sich in dieser kalkgesättigten Rohmischung derart bildende Ettringit ist röntgenamorph, es handelt sich um die gelförmige Phase des Ettringits, der um die Tonerdezementteilchen eine Art "Schafspelz" bildet. Dies führt dazu, daß der Tonerdezement zunächst nicht reagieren kann, so daß auch keine festigkeitsbildenden Reaktionen stattfinden, die die Rohmischung ansteifen. Auf diese Weise erhält man eine genügende Vorhaltzeit für die Rohmischung in der Größenordnung von etwa 20 min. Während dieser Zeit wird das Aluminat des Tonerdezements praktisch vom gelförmigen Ettringit abgeschirmt.

Die Erwärmung in der Form, die vorzugsweise mittels eines elektrischen Hochfrequenzfeldes erfolgt, führt dann dazu, daß sich der Ettringit umkristallisiert zu größeren Stäbchen, wodurch der "Schafspelz" durchlässig wird und sich der Tonerdezement umsetzen kann. Gleichzeitig bildet sich Monosulfat in Plättchenform (zusammen mit weiteren Monophasen) gemäß foldender Reaktionsgleichung:

$$CA + Cs + 2C + 12H \rightarrow C_3ACs \cdot 12H$$

Das Wasserglas, dessen Kieselsäureanteil durch Ausflocken zu einem Verkleben der Teilchen der Rohmischung führt, wirkt dann über seine $Na^+$ und/oder $K^+$ -Ionen anregend auf die Tonerdekomponente, die durch die Umkristallisierung des Ettringits zugänglich wird, und löst damit festigkeitsbildende Reaktionen des Zementes infolge der Wärmebehandlung aus, bei denen dann der Anhydrit unter Bildung von Monophasen umgesetzt wird.

Der Verklebungseffekt des Kieselsäureanteils des Wasserglases ist insofern vorteilhaft, als die Ettringit- und Monophasenkristalle zur vorzeitigen Zerstörung der Schaumporen führen könnten, dem aber dann durch den Verklebungseffekt entgegengewirkt wird derart, daß die Rohmischung nicht zusammenfällt. An sich kann man aber auch die Alkaliionen, die dazu dienen, die Tonerdekomponente anzuregen, auf andere Weise einbringen.

Die kombinierte Zugabe von Gips und Anhydrit ist wichtig, um einerseits vor allem durch den Gips eine möglichst hohe Angfangssulfationenkonzentration zu erzielen, wobei die Sulfationen dann sehr schnell mit der Tonerdekomponente reagieren und diese damit bremsen, andererseits jedoch auch genügend Sulfat vor allem durch den Anhydrit zur Verfügung zu haben, das nicht zur Bildung von gelförmigem Ettringit verbraucht ist, um bei der Wärmebehandlung weitere Ettringit- und Monophasenkristalle zu erzeugen, da diese Stäbchen und vor allem Plättchen dem Rohling Festigkeit verleihen. Hierbei wird die unterschiedliche Lösungsgeschwindigkeit von

Gips und Anhydrit in Wasser ausgenutzt, diejenige von Gips ist mindestens doppelt so groß wie diejenige von Anhydrit. Während der Gips zur Bildung des gelförmigen Ettringit praktisch verbraucht wird, kann der Anhydrit für die Festigkeitsbildung genutzt werden.

Anstelle von Gips läßt sich auch Hemihydrat einsetzen, jedoch wird ersteres bevorzugt. Gegebenenfalls kann man auch einen Verflüssiger zur Herabsetzung der verwendeten Wassermenge einsetzen.

**Beispiel**

Eine zweckmäßige Rohmischung wird hergestellt aus 40 bis 60 kg Tonerdezement, 10 kg Anhydrit, 4 bis 7 kg Gips, 30 l Wasserglas, 240 kg Kalkhydrat, 1000 kg Quarzsand oder -mehl, 580 bis 620 kg Wasser und 30 bis 60 kg Schaum (Schaumrohdichte 0,06 g/cm$^3$). Diese Rohmischung ist sehr gut gießbar, ermöglicht eine Vorhaltzeit von etwa 20 min oder mehr, liefert innerhalb kurzer Zeit Rohlinge (40 cm x 20 cm x 20 cm) mit ausreichender Festigkeit (etwa in weniger als 100 sec bei einer HF-Erwärmung auf ca. 50°C) und benötigt nur einen Zementanteil in der Größenordnung von weniger als 3 Gew.-%. Dies bedeutet eine wesentliche Herabsetzung des Zementanteils, ohne daß hierdurch die Formstandzeiten, der Energieaufwand für die Wärmebehandlung oder die Festigkeit der Rohlinge beeinträchtigt werden.

Gegebenenfalls kann es zweckmäßig sein, der Rohmischung noch einen Anteil Portlandzement zuzusetzen, wodurch die Stapelfestigkeit der Rohlinge günstig beeinflußt wird.

Dieses Verfahren läßt sich allgemein zur gesteuerten Schnellerhärtung einer gießfähigen kalkhaltigen Rohmischung verwenden, die Zement mit Abbindeverzögerer zum Erstarren der Rohmischung enthält, wobei der Rohmischung kurzzeitig Wärme zum Ingangsetzen der Erstarrung zugeführt wird. Neben der Herstellung von Kalksilikatprodukten, insbesondere Schaumsilikatprodukten, wie Wandbaustoffen kommt daher die Anwendung auch bei der Herstellung von zementgebundenen Produkten, insbesondere Schaumbetonprodukten, von Keramikprodukten, insbesondere Schaumkeramikprodukten, oder die Anwendung bei der Herstellung von Baustoffen auf der Basis von Plasten, wobei der der Rohmischung Kalk zugesetzt wird, infrage. Zu den letztgenannten Produkten zählen beispielsweise Mauerwerksverblender, Mörtel und Estriche, wobei neben den Plasten, etwa eine Acryldispersion o.dgl., als Füller Fasern, Sand, Methylcellulose und/oder Farbpigmente verwendet werden.

**Patentansprüche**

1. Verfahren zum Herstellen von blockförmigen Wandbaustoffen auf Kalksilikatbasis, bei dem eine gießfähige Rohmischung im wesentlichen aus einem körnigen $SiO_2$-haltigen Material, Kalk Wasser, Zement, einem zusätzlichen Alkaliträger und Schaum hergestellt, die Rohmischung in Formen gegossen und darin durch Wärmebehandlung im wesentlichen drucklos zu Rohlingen verarbeitet wird unter Ausnutzung der sich ergebenden Erhärtung während der Formstandzeit zur Erzielung einer ausreichenden Festigkeit der Rohlinge für die Entformung und den nachfolgenden Transport in einen Autoklaven, wo die Rohlinge dampfgehärtet werden, wobei der Zement durch einen Verzögerer derart eingestellt ist, daß dessen festigkeitsbildende Reaktionen in wesentlichen erst durch die Wärmeeinwirkung der Form ausgelöst werden, dadurch gekennzeichnet, daß als Zement Tonerdezement zusammen mit Anhydrit und wasserhaltigem Calciumsulfat verwendet wird derart, daß im wesentlichen gelförmiger Ettringit vor der Wärmebehandlung in der Rohmischung vorliegt, den man durch die Wärmeeinwirkung umkristallisiert.

2. Verfahren nach Anspruch 2, dadurch gekennzeichnet, daß als wasserhaltiges Calciumsulfat Gips (Dihydrat) verwendet wird.

3.Verfahren nach Anspruch 1 oder 2, dadurch gekennzeichnet, daß der Zement einen Portlandzementanteil aufweist.

4. Verfahren nach einem der Ansprüche 1 bis 3, dadurch gekennzeichnet, daß als zusätzlicher Alkaliträger Wasserglas verwendet wird.

5. Verfahren nach Anspruch 4, dadurch gekennzeichnet, daß als Wasserglas ein Na/K-Mischwasserglas verwendet wird.

6. Verfahren zur gesteuerten Schnellerhärtung einer gießfähigen kalkhaltigen Rohmischung, die Zement mit einem Abbindeverzögerer zum Erstarren der Rohmischung enthält, wobei der vergossenen Rohmischung kurzzeitig Wärme zum Ingangsetzen der Erstarrung zugeführt wird, dadurch gekennzeichnet, daß als Zement Tonerdezement zusammen mit Anhydrit und wasserhaltigem Calciumsulfat verwendet wird derart, daß im wesentlichen gelförmiger Ettringit vor der Wärmebehandlung in der Rohmischung vorliegt, den man durch die Wärmebehandlung umkristallisiert, wobei insbesondere nach einem der Ansprüche 2 bis 5 verfahren wird.

**Claims**

1. A process for producing block-shaped building materials for walls, based on lime silicate, in which a castable crude mixture is produced essentially from a granular $SiO_2$-containing material, lime, water, cement, an additional alkali vehicle and foam, the crude mixture is cast in moulds and formed into blanks

therein by heat treatment in a substantially pressureless state, the setting which occurs during the mould standing time being used to give adequate strength of the blanks for removal from the moulds and subsequent transport to an autoclave where the blanks are steam-cured, the cement being so adjusted by means of a retarding agent that its strength-forming reactions are initiated basically only by the heat action in the mould, characterised in that alumina cement is so used as the cement together with anhydrite and water-containing calcium sulphate that ettringite substantially in gel form is present in the crude mixture before the heat treatment and is recrystallized by the action of the heat.

2. A process according to claim 1, characterised in that the water-containing calcium sulphate used is gypsum (dihydrate).

3. A process according to claim 1 or 2, characterised in that the cement contains a proportion of Portland cement.

4. A process according to any one of claims 1 to 3, characterised in that water glass is used as an additional alkali vehicle.

5. A process according to claim 4, characterised in that the water glass used is an Na/K mixture water glass.

6. A process for the controlled rapid setting of a castable lime-containing crude mixture which contains cement together with a setting retarding agent for solidification of the crude mixture, heat being briefly applied to the cast crude mixture to initiate the solidification process, characterised in that alumina cement is so used as the cement together with anhydrite and water-containing calcium, sulphate, that ettringite substantially in gel form is present in the crude mixture before the heat treatment and is recrystallized by the action of the heat, the procedure being more particularly in accordance with any one of claims 2 to 5.

**Revendications**

1. Procédé pour la fabrication de matériaux de construction pour parois en forme de bloc, à base de silicate de calcium, selon lequel on réalise un mélange brut pouvant être coulé, composé essentiellement d'un matériau granulaire contenant $SiO_2$, de chaux, d'eau, d'un ciment, d'un support alcalin supplémentaire et de mousse, on coule le mélange brut dans des moules dans lesquels il est transformé en ébauches par traitement thermique essentiellement sans pression, le durcissement qui se produit dans les moules étant utilise pour obtenir une résistance suffisante de la part des ébauches pour qu'elles puissent être demoulées et transportées dans un autoclave où les ébauches sont durcies à la vapeur, tandis que le ciment est ajusté par un retardateur de telle sorte que les réactions de formation de la rigidité qui lui sont propres essentiellement ne se déclenchent que sous l'action de la chaleur dans le moule, caractérisé par le fait que le ciment utilisé est un ciment alumineux avec anhydrite et sulfate de calcium hydraté de manière qu'il y ait dans le mélange brut de l'ettringite essentiellement sous forme de gel avant le traitement thermique, laquelle est recristallisée sous l'action de la chaleur.

2. Procédé selon la revendication 1, caractérisé par le fait que le sulfate de calcium hydraté utilisé est un plâtre (dihydrate).

3. Procédé selon la revendication 1 ou 2, caractérisé par le fait que le ciment contient du ciment de Portland.

4. Procédé selon l'une des revendications 1 à 3, caractérisé par le fait que l'on utilise du verre soluble comme support alcali supplémentaire.

5. Procédé selon la revendication 4, caractérisé par le fait qu'on utilise comme verre soluble, un verre soluble double Na/K.

6. Procédé pour le durcissement rapide contrôlé d'un mélange brut contenant de la chaux et susceptible d'être coulé, mélange contenant du ciment avec un retardateur de prise pour la solidification du mélange brut, dans lequel il est fourni au mélange coulé pendant un court interval de temps de la chaleur pour le début de la solidification, caractérisé par le fait que le ciment utilisé est un ciment alumineux additionné d'anhydrite et de sulfate de calcium hydraté, de sorte que de l'ettringite essentiellement sous forme de gel est présente dans le mélange brut avant le traitement thermique, ettringite qui est recristallisée par le traitement thermique, dans lequel on procède de préférence selon l'une des revendications 2 à 5.